# EUROPEAN PATENT APPLICATION

(11) **EP 4 691 253 A1**
(43) Date of publication of application: **11.02.2026**
(21) Application number: 24779241.9
(22) Date of filing: 07.03.2024
(51) Int. Cl.: A23J 3/14, A23J 3/22, A23J 3/26, A23L 5/00, A23L 11/00

(54) **DEFIBRATED PRODUCT OF ORGANIZED FIBROUS VEGETABLE PROTEIN, PACKAGE, AND METHOD FOR PRODUCING DEFIBRATED PRODUCT OF ORGANIZED FIBROUS VEGETABLE PROTEIN**

(30) Priority: 28.03.2023 JP 2023051380
(71) Applicant: Nissui Corporation, Tokyo 105-8676 (JP)
(72) Inventor: YOKOTA, Nobuhiro, Hachioji-shi, Tokyo 192-0991 (JP); HORIUCHI, Yu, Hachioji-shi, Tokyo 192-0991 (JP); SHIGEMOTO, Ayane, Hachioji-shi, Tokyo 192-0991 (JP)
(74) Representative: Mewburn Ellis LLP
(86) International application number: PCT/JP2024/008703
(87) International publication number: WO 2024/203107

(57) **Abstract**

Provided are a vegetable protein material capable of producing a food product having excellent texture; and a method for producing a vegetable protein material capable of producing a food product having excellent texture.

A defibrated product of the textured fibrous vegetable protein, wherein a number average length of the contained fibers is 10 mm or more, and the content of fibers having an aspect ratio of less than 5 is 80% or less on a number basis; and a method for producing a defibrated product of a textured fibrous vegetable protein, including a step of processing a textured fibrous vegetable protein in a gap between a first surface and a second surface facing the first surface and moving relative to the first surface.

## Description

### Technical Field

The present disclosure relates to a defibrated product of a textured fibrous vegetable protein, a package, and a method for producing a defibrated product of a textured fibrous vegetable protein.

### Background Art

In recent years, eating habits suppressing consumption of animal materials have been spreading all over the world from the viewpoint of increasing health awareness and reducing environmental burden. As a part thereof, there is an increasing demand for plant-based foods in which some or all of animal materials are substituted with vegetable proteins. Among vegetable proteins, textured proteins (textured vegetable proteins (TVP) such as granular vegetable proteins and fibrous vegetable proteins) are used in various processed foods as substitutes mainly for livestock meat (for example, Patent Literatures 1 to 3).

There are also increasing cases where the textured vegetable protein is commercialized as a cooking material before processing so as to be easily cooked at home. However, many of them are minced or block. What is referred to as a fibrous vegetable protein is actually also a massive material having a bound fibrous tissue, and there is no material (defibrated product) that is individualized while maintaining the fiber length to some extent.

The reason why the defibrated product of the fibrous vegetable protein is not commercially available as a cooking material has been considered to be that many of the textured vegetable proteins have been premised on the use as a substitute for livestock meat, and thus there has been no need for fiber shape, and that it has been difficult to fibrillate the fibrous vegetable protein without excessively shortening the fiber length in the first place and it has not been realized.

### Document List

### Patent Literatures

Patent Literature 1: Japanese Patent Application Publication No. 2010-200627
Patent Literature 2: Japanese Patent Application Publication No. 2022-032496
Patent Literature 3: Japanese Patent Application Publication No. 2022-117184

### Summary of Invention

### Technical Problem

If a defibrated product of a fibrous vegetable protein having a sufficient fiber length can be obtained, the defibrated product can impart excellent texture to food, and can be useful as a cooking material that substitutes various fibrous food materials regardless of animal or vegetable origin, such as chicken, fish meat, and vegetables. The present disclosure relates to providing a vegetable protein material capable of producing a food product having excellent texture, and a method for producing a vegetable protein material capable of producing a food product having excellent texture.

### Solution to Problem

In the defibrated product of the textured fibrous vegetable protein of the present disclosure, a number average length of the contained fibers is 10 mm or more, and the content of fibers having an aspect ratio of less than 5 is 80% or less on a number basis.

The method for producing a defibrated product of a textured fibrous vegetable protein of the present disclosure includes a step of processing a textured fibrous vegetable protein in a gap between a first surface and a second surface facing the first surface and moving relative to the first surface.

### Brief Description of Drawings

[Fig. 1] A photograph showing an example of a textured fibrous vegetable protein before defibration.
[Fig. 2] A photograph showing an example of a textured fibrous vegetable protein after defibration.
[Fig. 3] A histogram showing a distribution of aspect ratios of fibers obtained in Comparative Example 1.
[Fig. 4] A histogram showing a distribution of aspect ratios of fibers obtained in Example 1.
[Fig. 5] A histogram showing a distribution of aspect ratios of fibers obtained in Example 2.
[Fig. 6] A histogram showing a distribution of aspect ratios of fibers obtained in Example 3.
[Fig. 7] A histogram showing a distribution of fiber lengths obtained in Comparative Example 1.
[Fig. 8] A histogram showing a distribution of fiber lengths obtained in Example 1.
[Fig. 9] A histogram showing a distribution of fiber lengths obtained in Example 2.
[Fig. 10] A histogram showing a distribution of fiber lengths obtained in Example 3.

### Description of Embodiments

### [Definition of Terms]

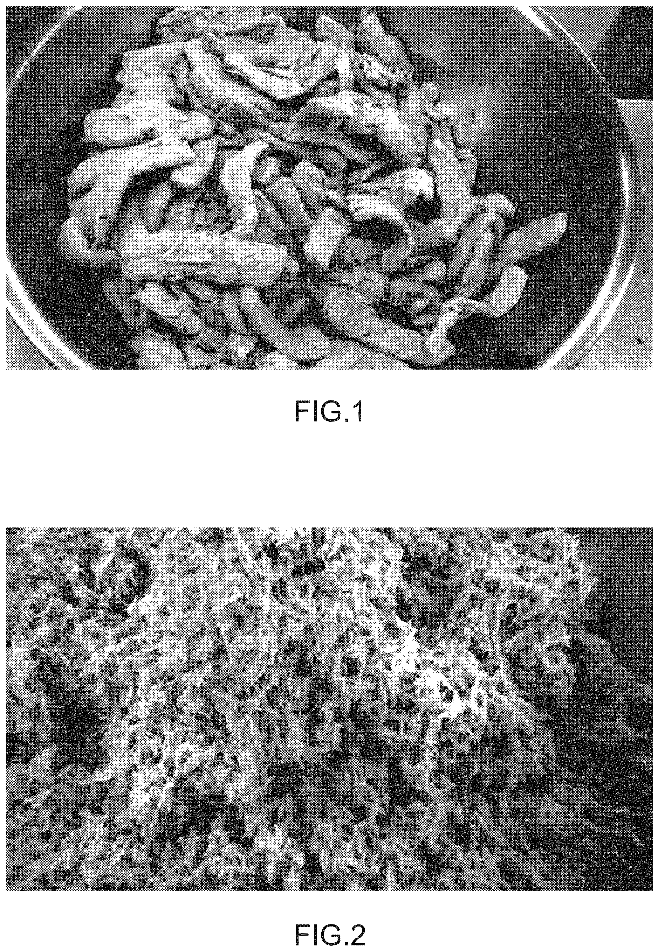

In the present disclosure, the "textured fibrous vegetable protein" refers to a vegetable protein having a meat-like tissue, which is defined as a "fibrous vegetable protein" in the "Japanese Agricultural Standards for vegetable proteins" of the Ministry of Agriculture, Forestry and Fisheries. In the "Japanese Agricultural Standards for vegetable proteins" of the Ministry of Agriculture, Forestry and Fisheries, the "fibrous vegetable protein" is defined as "a vegetable protein which is formed into a fibrous form and has a meat-like tissue", and a "granular vegetable protein" is defined as "a vegetable protein which is formed into a granular or flake shape and has a meat-like tissue". A thread-like protein obtained by a method of extruding a raw material from small pores corresponding to a fiber diameter (so-called "spinning method") is not called a textured vegetable protein. As shown in Fig. 1, a non-fibrillated textured fibrous vegetable protein is referred to as "fibrous", but is actually a massive material having a bound fibrous tissue.

In the present disclosure, the "defibrated product" is obtained by fibrillating (unwinding) the bound fibrous tissue in the textured fibrous vegetable protein and individualizing each fiber to such an extent that the fibers can be easily separated by hand or the like. Fig. 2 shows an example of the textured fibrous vegetable protein after defibration.

In the present disclosure, the "number average length" is a value obtained by dividing a sum of all lengths of contained fibers by the number of the contained fibers in a specific fiber group containing a plurality of individualized fibers. The number average length can be calculated based on the dimension of the major axis of each fiber obtained when 100 fibers are randomly extracted from a defibrated product of a textured fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, the "number average width" is a value obtained by dividing a sum of all widths of contained fibers by the number of the contained fibers in a specific fiber group containing a plurality of individualized fibers. The number average width can be calculated based on the dimension of the minor axis of each fiber obtained when 100 fibers are randomly extracted from a defibrated product of a textured fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, the "aspect ratio" is a value obtained by dividing a length by a width in the individualized fiber. The aspect ratio can be calculated based on the dimension of the major axis and the dimension of the minor axis of fibers obtained when 100 fibers are randomly extracted from a defibrated product of a textured fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, having a content of fibers satisfying a specific condition of "X% or more (or less) on a number basis" means that in a specific fiber group including a plurality of individualized fibers, X or more (or less) fibers satisfying the specific condition are included in 100 fibers.

Incidentally, regarding the number average length, the number average width, and the content on a number basis, for convenience of calculation on a number basis, unavoidably obtained fiber fragments are not used for calculation in order to stabilize the measurement result. Specifically, the calculation is performed so that those having a length of 2 mm or less are not included in the 100 fibers to be extracted.

In the present disclosure, when a certain numerical range is indicated as "A to B", the numerical range is A or more and B or less. That is, A and B are included in the numerical range.

### [Defibrated product of textured fibrous vegetable protein]

In the defibrated product of the textured fibrous vegetable protein of the present disclosure, a number average length of the contained fibers is 10 mm or more. The fibers contained in the defibrated product of the textured fibrous vegetable protein may have a number average length of 11 mm or more, 12 mm or more, 13 mm or more, 15 mm or more, 17 mm or more, or 20 mm or more. Typically, the longer the number average length of the fibers contained in the defibrated product of the textured fibrous vegetable protein, the easier it is to impart excellent texture to food.

The upper limit value of the number average length of the fibers contained in the defibrated product of the textured fibrous vegetable protein is not particularly limited. For example, the fibers contained in the defibrated product of the textured fibrous vegetable protein may have a number average length of 100 mm or less, 80 mm or less, 70 mm or less, 60 mm or less, 50 mm or less, 40 mm or less, or 30 mm or less. Typically, the shorter the number average length of the fibers contained in the defibrated product of the textured fibrous vegetable protein, the higher the production efficiency.

The upper limit value and the lower limit value of the number average length of the fibers contained in the defibrated product of the textured fibrous vegetable protein can be arbitrarily combined within the scope of the present disclosure. For example, the fibers contained in the defibrated product of the textured fibrous vegetable protein may have a number average length in the range of 10 mm to 100 mm, in the range of 11 mm to 80 mm, in the range of 12 mm to 70 mm, in the range of 13 mm to 60 mm, in the range of 15 mm to 50 mm, in the range of 17 mm to 40 mm, or in the range of 20 mm to 30 mm. When the number average length of the fibers contained in the defibrated product of the textured fibrous vegetable protein is within an appropriate range, it is possible to efficiently produce a defibrated product capable of imparting excellent texture to food.

In the defibrated product of the textured fibrous vegetable protein of the present disclosure, the content of fibers having an aspect ratio of less than 5 is 80% or less on a number basis. The content of fibers having an aspect ratio of less than 5 in the defibrated product of the textured fibrous vegetable protein may be 75% or less, 70% or less, 60% or less, 50% or less, 40% or less, 30% or less, or 20% or less on a number basis. Typically, the lower the content of fibers having an aspect ratio of less than 5 in the defibrated product of the textured fibrous vegetable protein, the easier it is to impart excellent texture to food.

The content of fibers having an aspect ratio of less than 5 in the defibrated product of the textured fibrous vegetable protein may be 0% or more, 1% or more, 2% or more, 3% or more, 4% or more, 5% or more, 6% or more, or 7% or more on a number basis. Typically, the higher the content of fibers having an aspect ratio of less than 5 in the defibrated product of the textured fibrous vegetable protein, the higher the production efficiency.

The upper limit value and the lower limit value of the content of fibers having an aspect ratio of less than 5 in the defibrated product of the textured fibrous vegetable protein can be arbitrarily combined within the scope of the present disclosure. For example, the content of fibers having an aspect ratio of less than 5 in the defibrated product of the textured fibrous vegetable protein may be in the range of 0% to 80%, in the range of 1% to 75%, in the range of 2% to 70%, in the range of 3% to 60%, in the range of 4% to 50%, in the range of 5% to 40%, in the range of 6% to 30%, or in the range of 7% to 20% on a number basis. When the content of fibers having an aspect ratio of less than 5 in the defibrated product of the textured fibrous vegetable protein is within an appropriate range, it is possible to efficiently produce a defibrated product capable of imparting excellent texture to food.

In the defibrated product of the textured fibrous vegetable protein of the present disclosure, the content of fibers having an aspect ratio of 10 or more is not particularly limited. For example, the content of fibers having an aspect ratio of 10 or more in the defibrated product of the textured fibrous vegetable protein may be 0.5% or more, 0.8% or more, 1% or more, 3% or more, 5% or more, 7% or more, or 9% or more on a number basis. Typically, the higher the content of fibers having an aspect ratio of 10 or more in the defibrated product of the textured fibrous vegetable protein, the easier it is to impart excellent texture to food.

For example, the content of fibers having an aspect ratio of 10 or more in the defibrated product of the textured fibrous vegetable protein may be 100% or less, 80% or less, 60% or less, 50% or less, 40% or less, 30% or less, or 20% or less on a number basis. Typically, the lower the content of fibers having an aspect ratio of 10 or more in the defibrated product of the textured fibrous vegetable protein, the higher the production efficiency.

The upper limit value and the lower limit value of the content of fibers having an aspect ratio of 10 or more in the defibrated product of the textured fibrous vegetable protein can be arbitrarily combined within the scope of the present disclosure. For example, the content of fibers having an aspect ratio of 10 or more in the defibrated product of the textured fibrous vegetable protein may be in the range of 0.5% to 100%, in the range of 0.8% to 80%, in the range of 1% to 60%, in the range of 3% to 50%, in the range of 5% to 40%, in the range of 7% to 30%, or in the range of 9% to 20% on a number basis. When the content of fibers having an aspect ratio of 10 or more in the defibrated product of the textured fibrous vegetable protein is within an appropriate range, it is possible to efficiently produce a defibrated product capable of imparting excellent texture to food.

In the defibrated product of the textured fibrous vegetable protein of the present disclosure, the content of fibers having an aspect ratio of 5 or more and less than 10 is not particularly limited. For example, the content of fibers having an aspect ratio of 5 or more and less than 10 in the defibrated product of the textured fibrous vegetable protein may be 20% or more, 25% or more, 50% or more, 60% or more, or 70% or more on a number basis. For example, the content of fibers having an aspect ratio of 5 or more and less than 10 in the defibrated product of the textured fibrous vegetable protein may be, for example, 95% or less, 90% or less, 85% or less, 80% or less, or 75% or less on a number basis.

The upper limit value and the lower limit value of the content of fibers having an aspect ratio of 5 or more and less than 10 in the defibrated product of the textured fibrous vegetable protein can be arbitrarily combined within the scope of the present disclosure. For example, the content of fibers having an aspect ratio of 5 or more and less than 10 in the defibrated product of the textured fibrous vegetable protein may be in the range of 20% to 95%, in the range of 25% to 90%, in the range of 50% to 85%, in the range of 60% to 80%, or in the range of 70% to 75% on a number basis.

In the defibrated product of the textured fibrous vegetable protein of the present disclosure, the content of fibers having a length of less than 10 mm is not particularly limited. For example, the content of fibers having a length of less than 10 mm in the defibrated product of the textured fibrous vegetable protein may be 50% or less, 40% or less, 30% or less, 20% or less, 10% or less, or 5% or less on a number basis. Typically, the lower the content of fibers having a length of less than 10 mm in the defibrated product of the textured fibrous vegetable protein, the easier it is to impart excellent texture to food.

The content of fibers having a length of less than 10 mm in the defibrated product of the textured fibrous vegetable protein may be 0% or more than 0% on a number basis. That is, for example, the content of fibers having a length of less than 10 mm in the defibrated product of the textured fibrous vegetable protein may be in the range of 0% to 50%, in the range of 0% to 40%, in the range of 0% to 30%, in the range of 0% to 20%, in the range of 0% to 10%, or in the range of 0% to 5% on a number basis.

In the defibrated product of the textured fibrous vegetable protein of the present disclosure, the content of fibers having a length of 30 mm or more is not particularly limited. For example, the content of fibers having a length of 30 mm or more in the defibrated product of the textured fibrous vegetable protein may be 0.5% or more, 0.8% or more, 1% or more, 5% or more, or 10% or more on a number basis. Typically, the higher the content of fibers having a length of 30 mm or more in the defibrated product of the textured fibrous vegetable protein, the easier it is to impart excellent texture to food.

For example, the content of fibers having a length of 30 mm or more in the defibrated product of the textured fibrous vegetable protein may be 100% or less, 80% or less, 60% or less, 40% or less, or 20% or less on a number basis. Typically, the lower the content of fibers having a length of 30 mm or more in the defibrated product of the textured fibrous vegetable protein, the higher the production efficiency.

The upper limit value and the lower limit value of the content of fibers having a length of 30 mm or more in the defibrated product of the textured fibrous vegetable protein can be arbitrarily combined within the scope of the present disclosure. For example, the content of fibers having a length of 30 mm or more in the defibrated product of the textured fibrous vegetable protein may be in the range of 0.5% to 100%, in the range of 0.8% to 80%, in the range of 1% to 60%, in the range of 5% to 40%, or in the range of 10% to 20% on a number basis. When the content of fibers having a length of 30 mm or more in the defibrated product of the textured fibrous vegetable protein is within an appropriate range, it is possible to efficiently produce a defibrated product capable of imparting excellent texture to food.

In the defibrated product of the textured fibrous vegetable protein of the present disclosure, the content of fibers having a length of 10 mm or more and less than 30 mm is not particularly limited. For example, the content of fibers having a length of 10 mm or more and less than 30 mm in the defibrated product of the textured fibrous vegetable protein may be 50% or more, 60% or more, 70% or more, or 80% or more on a number basis. For example, the content of fibers having a length of 10 mm or more and less than 30 mm in the defibrated product of the textured fibrous vegetable protein may be 95% or less, 92% or less, 90% or less, or 88% or less on a number basis.

The upper limit value and the lower limit value of the content of fibers having a length of 10 mm or more and less than 30 mm in the defibrated product of the textured fibrous vegetable protein can be arbitrarily combined within the scope of the present disclosure. For example, the content of fibers having a length of 10 mm or more and less than 30 mm in the defibrated product of the textured fibrous vegetable protein may be in the range of 50% to 95%, in the range of 60% to 92%, in the range of 70% to 90%, or in the range of 80% to 88% on a number basis.

The number average width of the fibers contained in the defibrated product of the textured fibrous vegetable protein of the present disclosure is not particularly limited. For example, the fibers contained in the defibrated product of the textured fibrous vegetable protein may have a number average width of 1 mm or more, 2 mm or more, or 3 mm or more. Typically, the larger the number average width of the fibers contained in the defibrated product of the textured fibrous vegetable protein, the easier it is to impart excellent texture to food.

For example, the fibers contained in the defibrated product of the textured fibrous vegetable protein may have a number average width of 10 mm or less, 8 mm or less, or 5 mm or less. Typically, the smaller the number average width of the fibers contained in the defibrated product of the textured fibrous vegetable protein, the higher the production efficiency.

The upper limit value and the lower limit value of the number average width of the fibers contained in the defibrated product of the textured fibrous vegetable protein can be arbitrarily combined within the scope of the present disclosure. For example, the fibers contained in the defibrated product of the textured fibrous vegetable protein may have a number average width in the range of 1 mm to 10 mm, in the range of 2 mm to 8 mm, or in the range of 3 mm to 5 mm. When the number average width of the fibers contained in the defibrated product of the textured fibrous vegetable protein is within an appropriate range, it is possible to efficiently produce a defibrated product capable of imparting excellent texture to food.

The defibrated product of the textured fibrous vegetable protein of the present disclosure may contain, for example, a protein derived from grains or legumes. As the grain, for example, a fruit (seed) of a gramineous plant can be used. As the legume, for example, a fruit (seed) of a leguminous plant can be used. Examples of the gramineous plant include wheat, barley, oat, rye, adlay, rice, and corn. Examples of the leguminous plant include soybean, broad bean, pea, kidney bean, chickpea, winged bean, lentil, peanut, red bean, and mung bean.

In particular, the defibrated product of the textured fibrous vegetable protein may contain a protein derived from pea. Typically, when the defibrated product of the textured fibrous vegetable protein contains a protein derived from pea, the desired aspect ratio is easily obtained. Also, typically, when the defibrated product of the textured fibrous vegetable protein contains a protein derived from pea, generation of an undesirable odor derived from hexanal, 2-pentylfuran, or the like is easily suppressed.

There are varieties of peas such as green, yellow and brown, but any of these may be used. Typically, when yellow peas are used, the desired aspect ratio is easily obtained. The protein derived from pea may be any of pea flour, concentrated pea protein, and separated pea protein. Typically, when separated pea protein is used, the desired aspect ratio is easily obtained.

The defibrated product of the textured fibrous vegetable protein may be free or substantially free of proteins derived from soybean. Typically, when the defibrated product of the textured fibrous vegetable protein does not contain a protein derived from soybean, the desired aspect ratio is easily obtained. Also, typically, when the defibrated product of the textured fibrous vegetable protein does not contain a protein derived from soybean, generation of an undesirable odor derived from hexanal, 2-pentylfuran, or the like is easily suppressed. Here, the phrase "substantially free of proteins derived from soybean" means that the content of the protein derived from soybean among the vegetable proteins contained in the defibrated product of the textured fibrous vegetable protein is 10 mass% or less. Among the vegetable proteins contained in the defibrated product of the textured fibrous vegetable protein, the content of the protein derived from soybean may be 5 mass% or less, 3 mass% or less, or 1 mass% or less.

The water content of the defibrated product of the textured fibrous vegetable protein of the present disclosure is not particularly limited. For example, the water content of the defibrated product of the textured fibrous vegetable protein may be in the range of 40 mass% to 80 mass%, or may be in the range of 50 mass% to 70 mass%. When the water content of the defibrated product of the textured fibrous vegetable protein is within an appropriate range, excellent texture can be easily imparted to food, and breakage during distribution as a package can be prevented.

The defibrated product of the textured fibrous vegetable protein of the present disclosure may be subjected to a drying step after fibrillation to set the water content of the defibrated product of the textured fibrous vegetable protein to 10% or less. By lowering the water content of the defibrated product of the textured fibrous vegetable protein, long-term storage becomes possible.

The defibrated product of the textured fibrous vegetable protein of the present disclosure may contain other components. For example, the defibrated product of the textured fibrous vegetable protein of the present disclosure may further contain at least one selected from the group consisting of animal proteins, dietary fibers, cereal flour, fruit juice, vegetables, starches, fats and oils, seasoning, spices, dyes, flavors, and enzymes.

The defibrated product of the textured fibrous vegetable protein of the present disclosure may be used as a cooking material for substituting various fibrous foods regardless of animal or vegetable origin. The defibrated product of the textured fibrous vegetable protein of the present disclosure may be used as a cooking material for substituting at least one livestock meat selected from the group consisting of beef, pork, horsemeat, mutton, goat and chicken, for example. Also, the defibrated product of the textured fibrous vegetable protein of the present disclosure may be used as a cooking material for substituting fish meat, for example. In addition, the defibrated product of the textured fibrous vegetable protein of the present disclosure may be used as a cooking material for substituting vegetables such as carrot, burdock root, green onion, and Japanese radish.

### [Package]

The present disclosure also includes a package containing a cooking material containing a defibrated product of a textured fibrous vegetable protein in a container. In the present disclosure, the "cooking material" typically refers to a material before cooking. Here, the "before cooking" means not being completed as a dish (for example, but not limited to, hamburg steak, meat ball, shumai, meat loaf, steak, or chicken meatball) or not being substantially completed as a dish.

In the package, the cooking material containing the defibrated product of the textured fibrous vegetable protein may be packaged in a container usually used as a food packaging container. The container may be, for example, a packaging container including a tray and/or a film made of at least one material selected from the group consisting of polyethylene, polypropylene, polyethylene terephthalate, polyamide, an ethylene-vinyl alcohol copolymer, and aluminum.

The size of the container is not particularly limited, but may be, for example, not greater than 30 cm × 50 cm × 5 cm as long as it is a commercially available product. The structure of the container is not particularly limited, but may be, for example, a film formed in a substantially rectangular bag shape. Further, the container may have a structure in which a film blocks an opening of a tray having a substantially rectangular parallelepiped shape having an opening on an upper side or a substantially quadrangular truncated pyramid shape having an opening on an upper side. At this time, a flange portion may be provided around the opening on the upper side of the tray in order to make the film easily adhere to the tray.

The package can be distributed in any temperature zone of a normal temperature zone, a chilled temperature zone, and a freezing temperature zone.

### [Method for producing defibrated product of textured fibrous vegetable protein]

The method for producing a defibrated product of a textured fibrous vegetable protein (method for fibrillating a textured fibrous vegetable protein) of the present disclosure includes a step of processing a textured fibrous vegetable protein in a gap between a first surface and a second surface facing the first surface and moving relative to the first surface.

As the textured fibrous vegetable protein, a commercially available product may be used, or a product produced using an extruder or the like may be used. The textured fibrous vegetable protein may contain, for example, a protein derived from grains or legumes. As the grain, for example, a fruit (seed) of a gramineous plant can be used. As the legume, for example, a fruit (seed) of a leguminous plant can be used. Examples of the gramineous plant include wheat, barley, oat, rye, adlay, rice, and corn. Examples of the leguminous plant include soybean, broad bean, pea, kidney bean, chickpea, winged bean, lentil, peanut, red bean, and mung bean.

In particular, the textured fibrous vegetable protein may contain a protein derived from pea. Typically, when the textured fibrous vegetable protein contains a protein derived from pea, the desired aspect ratio is easily obtained. Also, typically, when the textured fibrous vegetable protein contains a protein derived from pea, generation of an undesirable odor derived from hexanal, 2-pentylfuran, or the like is easily suppressed.

There are varieties of peas such as green, yellow and brown, but any of these may be used. Typically, when yellow peas are used, the desired aspect ratio is easily obtained. The protein derived from pea may be any of pea flour, concentrated pea protein, and separated pea protein. Typically, when separated pea protein is used, the desired aspect ratio is easily obtained.

The textured fibrous vegetable protein may be free or substantially free of proteins derived from soybean. Typically, when the textured fibrous vegetable protein does not contain a protein derived from soybean, the desired aspect ratio is easily obtained. Also, typically, when the textured fibrous vegetable protein does not contain a protein derived from soybean, generation of an undesirable odor derived from hexanal, 2-pentylfuran, or the like is easily suppressed. Here, the phrase "substantially free of proteins derived from soybean" means that the content of the protein derived from soybean among the vegetable proteins contained in the textured fibrous vegetable protein is 10 mass% or less. Among the vegetable proteins contained in the textured fibrous vegetable protein, the content of the protein derived from soybean may be 5 mass% or less, 3 mass% or less, or 1 mass% or less.

In the step of processing the textured fibrous vegetable protein in a gap between a first surface and a second surface facing the first surface and moving relative to the first surface, typically, the first surface and the second surface are surfaces included in one or more members included in a device used in the step. Typically, neither the first surface nor the second surface has a blade. In the step, three or more surfaces may be involved.

Aspects in which the second surface is moved relative to the first surface include any of (i) an aspect in which the first surface is moving and the second surface is stationary, (ii) an aspect in which the first surface and the second surface are both moving, but the speed and/or direction of movement of the first surface and the speed and/or direction of movement of the second surface are different from each other, and (iii) an aspect in which the second surface is moving and the first surface is stationary. Typically, in the relative motion, a component of a relative speed along a direction in which a distance from the first surface to the second surface is shortest is smaller than a component of a relative speed along a plane orthogonal to the direction.

The gap between the first surface and the second surface, that is, the shortest distance from the first surface to the second surface is not particularly limited. For example, the gap between the first surface and the second surface may be 0.5 mm or more, 0.8 mm or more, 1 mm or more, or 1.2 mm or more. Typically, the larger the gap between the first surface and the second surface, the more easily the breakage of the fiber during fibrillation is suppressed.

For example, the gap between the first surface and the second surface may be 3 mm or less, 2.8 mm or less, 2.6 mm or less, or 2 mm or less. Typically, the smaller the gap between the first surface and the second surface, the more efficiently fibrillation can be achieved.

The upper limit value and the lower limit value of the gap between the first surface and the second surface can be arbitrarily combined within the scope of the present disclosure. For example, the gap between the first surface and the second surface may be in the range of 0.5 mm to 3 mm, in the range of 0.8 mm to 2.8 mm, in the range of 1 mm to 2.6 mm, or in the range of 1.2 mm to 2 mm.

By processing the textured fibrous vegetable protein in the gap between the first surface and the second surface, the length and aspect ratio of the contained fibers will be appropriate. When the textured fibrous vegetable protein is processed with a device using a blade such as a food cutter or a food processor, the fiber length tends to be shortened and the aspect ratio of the fiber tends to be decreased. Incidentally, a method is also known in which the blade of food cutter is rotated in the reverse direction and the vegetable protein is processed with a blunt blade. For example, Japanese Patent Application Publication No. 2010-200627 discloses that the granular vegetable protein was processed by the method and fibrillated into a fibrous form so as to contain 60 mass% of the granular vegetable protein having a length of about 10 mm or more. However, when the method is applied to a fibrous vegetable protein instead of a granular vegetable protein, the fiber may be cut at a relatively high frequency although it is a blunt blade. In addition, it is considered that the reason why many long fibers appear to be obtained is that the contribution degree of the long fibers (having a large mass) increases in the mass-based evaluation, and it is inferred that many short fibers are actually contained in consideration of the fact that the fibers contained in the granular vegetable protein are originally short.

In the method for producing a defibrated product of a textured fibrous vegetable protein of the present disclosure, a grinding device may be used. The grinding device described herein is a device that grinds an object to be processed between a member having the first surface and a member having the second surface facing the first surface.

Non-limiting examples of such grinding devices include a stone mill, a rotary stone mill, an earthenware mortar, a mortar, and a grinding kneader. The grinding device may be manual or powered. The "stone mill" and the "rotary stone mill" herein are not necessarily made of stone, and refer to a general device generally called a "stone mill type". That is, the "stone mill" and the "rotary stone mill" may be made of metal, ceramic, wood, or resin. Examples of the rotary stone mill include "Supermasscolloider MKZA10-15J" manufactured by MASUKO SANGYO CO.,LTD.

When a stone mill or rotary stone mill is used, for example, the member having the first surface is a lower stone, and the member having the second surface is an upper stone. However, the opposite may be applied. When an earthenware mortar is used, for example, the member having the first surface is a bowl, and the member having the second surface is a wooden pestle. However, the opposite may be applied. When a mortar or grinding kneader is used, for example, the member having the first surface is a bowl, and the member having the second surface is a pestle. However, the opposite may be applied.

In this specification, each specific matter described in an embodiment regarding each aspect of the present disclosure may be arbitrarily combined into a new embodiment, and such a new embodiment should also be understood as being included in each aspect of the present disclosure.

### [Examples]

Hereinafter, the present disclosure will be described more specifically with reference to examples and the like, but the present disclosure is not limited at all by these examples and the like.

### [Preparation of textured fibrous vegetable protein]

A textured fibrous vegetable protein derived from pea was prepared using the raw materials shown in Table 1 under the conditions shown in Table 2. In addition, a textured fibrous vegetable protein derived from soybean was prepared using the raw materials shown in Table 3 under the conditions shown in Table 4.

**[Table 1]**

| Raw material of textured fibrous vegetable protein derived from pea | | Blending ratio (mass%) |
|---|---|---|
| Pea protein | NUTRALYS S85F (manufactured by Roquette) | 85 |
| Dietary fiber | PEA FIBER I 50M (manufactured by Roquette) | 15 |

**[Table 2]**

| Extruder | EA-100 manufactured by SUEHIRO EPM Corporation |
|---|---|
| Feed amount (kg/h) | 100 |
| Water addition amount (L/h) | 25 |
| Die plate temperature (°C) | 150 |
| Tip barrel temperature (°C) | 180 |
| Middle barrel 3 temperature (°C) | 160 |
| Middle barrel 2 temperature (°C) | 120 |
| Middle barrel 1 temperature (°C) | 100 |
| Screw rotation speed (rpm) | 240 |
| Die shape (mm) | Flat 3 × 25 |
| Number of dies | 1 |
| Cutter rotation speed (rpm) | 200 |
| Cutter blade (sheet) | 2 |

**[Table 3]**

| Raw material of textured fibrous vegetable protein derived from soybean | | Blending ratio (mass%) |
|---|---|---|
| Defatted soybean powder | Soya flour A (manufactured by Showa Sangyo Co., Ltd.) | 80 |
| Separated soybean protein | FUJIPRO FR (manufactured by Fuji Oil Co., Ltd.) | 15 |
| Corn starch | | 5 |

**[Table 4]**

| Extruder | EA-20 manufactured by SUEHIRO EPM Corporation |
|---|---|
| Feed amount (kg/h) | 15 |
| Water addition amount (L/h) | 5.4 |
| Die plate temperature (°C) | 140 |
| Tip barrel temperature (°C) | 140 |
| Middle barrel 2 temperature (°C) | 120 |
| Middle barrel 1 temperature (°C) | 100 |
| Screw rotation speed (rpm) | 200 |
| Die shape (mm) | φ2 |
| Number of dies | 1 |

### [Evaluation of method for fibrillating textured fibrous vegetable protein]

Using the obtained textured fibrous vegetable protein derived from pea, the influence of the difference in the fibrillation method was evaluated. Water was added twice (mass basis) the amount of the textured fibrous vegetable protein derived from pea, and the mixture was allowed to stand for 30 minutes to be rehydrated. Thereafter, the textured fibrous vegetable protein was fibrillated using a silent cutter "SC60-N" manufactured by Yanagiya Machinery Co., Ltd. in Comparative Example 1, and using "Supermasscolloider MKZA10-15J" manufactured by MASUKO SANGYO CO.,LTD. in Examples 1 to 3. In Examples 1 to 3, different operating conditions were employed as shown in Table 5. In Table 5, the "clearance" indicates the size of the gap between the treated surfaces.

**[Table 5]**

| | Example 1 | Example 2 | Example 3 |
|---|---|---|---|
| Clearance | 1.0 mm | 1.5 mm | 2.5 mm |
| Rotation speed | 2,000 rpm | 2,000 rpm | 2,000 rpm |

The defibrated textured fibrous vegetable protein derived from pea was put into a bowl containing water, individualized to each fiber, and then 100 fibers were randomly extracted. The extracted fibers were arranged on a plane, and photographed from directly above and image processed using "Visual Analyzer IRIS VA400" manufactured by Alpha M.O.S. Japan K.K., and ellipse approximation was performed. For each obtained fiber, the dimension of the major axis as length, the dimension of the minor axis as width, and a value obtained by dividing the length by the width as an aspect ratio were evaluated.

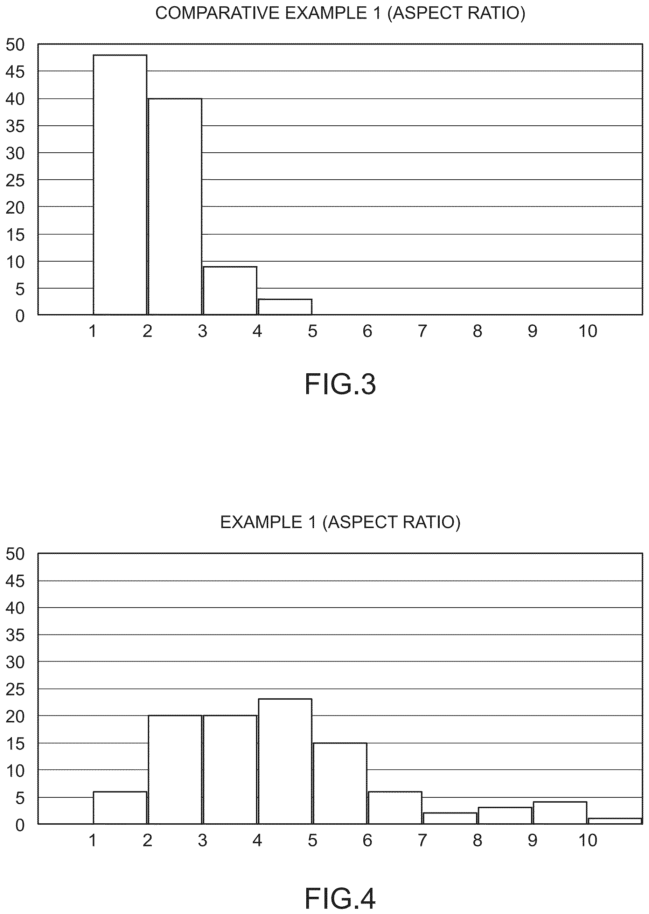

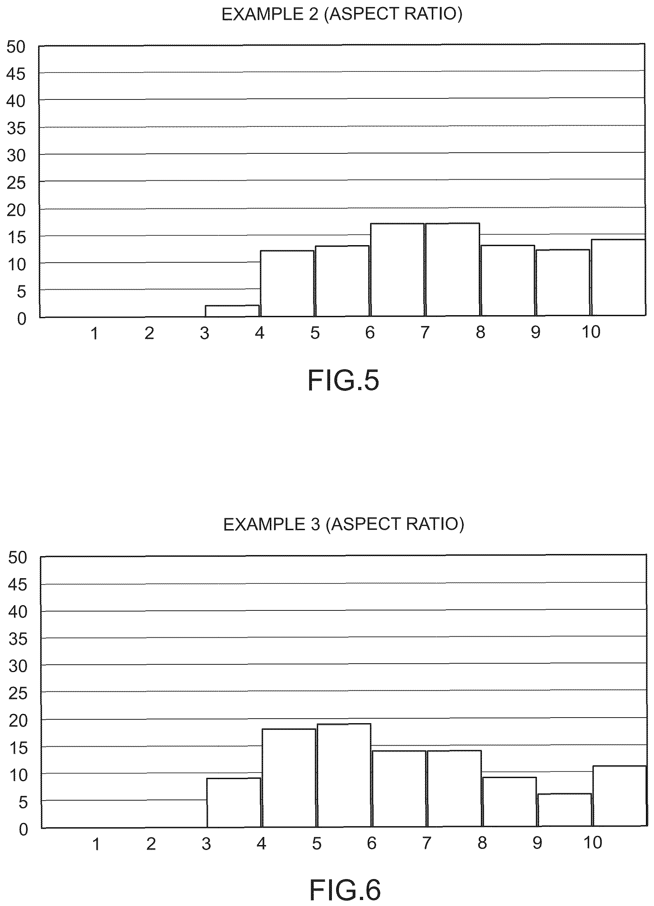

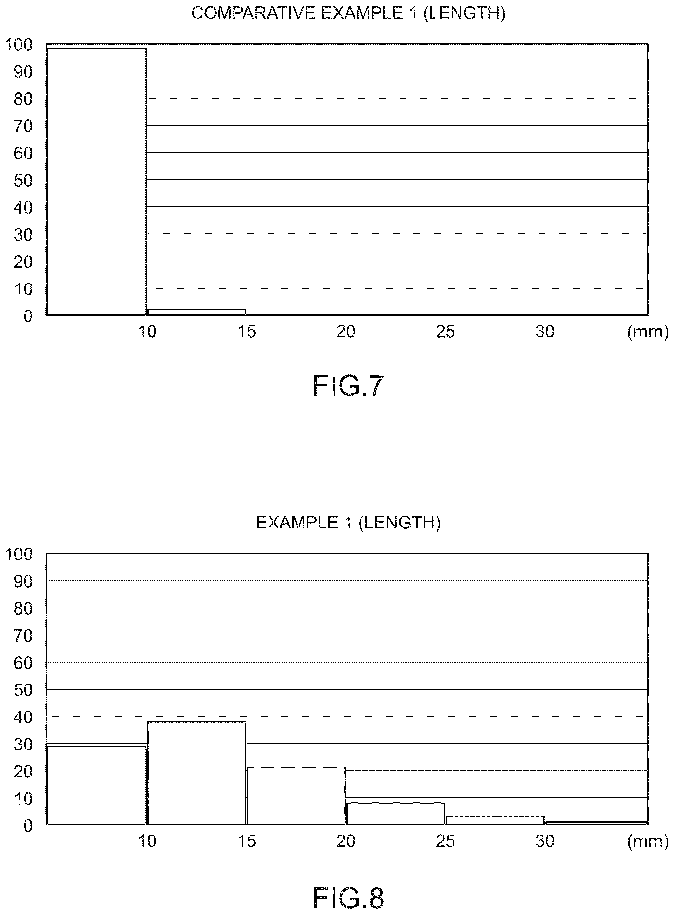

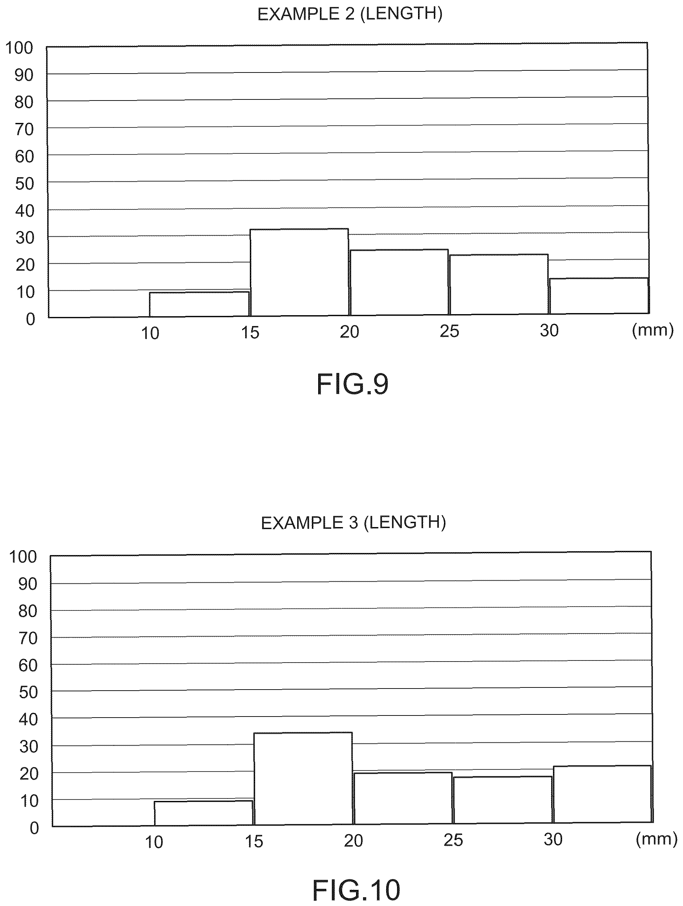

The aspect ratios are divided into three categories of less than 5, 5 or more and less than 10, and 10 or more, and the number of fibers corresponding to each category is shown in Table 6. The lengths are divided into three categories of less than 10 mm, 10 mm or more and less than 30 mm, and 30 mm or more, and the number and number average length of fibers corresponding to each category are shown in Table 7. Figs. 3 to 6 show histograms showing the distribution of aspect ratios of fibers obtained in Comparative Example 1 and Examples 1 to 3. Figs. 7 to 10 show histograms showing the fiber distribution of fiber lengths obtained in Comparative Example 1 and Examples 1 to 3. Note that, in each histogram of the aspect ratio, the rightmost bar indicates the total number of all the fibers having an aspect ratio of 10 or more, in each histogram of the lengths, the leftmost bar indicates the total number of all the fibers having a length of less than 10 mm, and in each histogram of the lengths, the rightmost bar indicates the total number of all the fibers having a length of 30 mm or more. The aspect ratios of all the extracted 100 fibers are shown in Table 8, and the lengths of all the extracted 100 fibers are shown in Table 9.

**[Table 6]**

| Aspect ratio | | | | |
|---|---|---|---|---|
| | Comparative Example 1 | Example 1 | Example 2 | Example 3 |
| <5 | 100 | 69 | 14 | 27 |
| 5 or more and less than 10 | 0 | 30 | 74 | 62 |
| 10≤ | 0 | 1 | 12 | 11 |

**[Table 7]**

| Length | | | | |
|---|---|---|---|---|
| | Comparative Example 1 | Example 1 | Example 2 | Example 3 |
| <10 | 98 | 29 | 0 | 0 |
| 10 or more and less than 30 | 2 | 70 | 87 | 81 |
| 30 ≦ | 0 | 1 | 13 | 19 |
| Average | 6.7 | 13.4 | 22.8 | 23.2 |

**[Table 8]**

| Aspect ratio | | | | | | | | | | | |
|---|---|---|---|---|---|---|---|---|---|---|---|
| Comparative Example 1 | Example 1 | Example 2 | Example 3 | Comparative Example 1 | Example 1 | Example 2 | Example 3 | Comparative Example 1 | Example 1 | Example 2 | Example 3 |
| 1.012 | 1.571 | 7.500 | 8.333 | 1.836 | 1.967 | 8.429 | 6.056 | 2.352 | 5.734 | 6.286 | 3.313 |
| 1.038 | 4.933 | 8.200 | 10.778 | 1.858 | 2.597 | 5.526 | 4.500 | 2.359 | 2.073 | 3.552 | 4.407 |
| 1.069 | 2.282 | 7.364 | 4.733 | 1.862 | 2.730 | 9.500 | 7.750 | 2.421 | 2.729 | 6.136 | 8.900 |
| 1.129 | 2.277 | 5.929 | 3.765 | 1.864 | 2.251 | 4.455 | 3.160 | 2.425 | 4.850 | 8.500 | 3.931 |
| 1.155 | 3.095 | 8.083 | 5.071 | 1.873 | 4.264 | 8.125 | 8.625 | 2.428 | 8.163 | 6.280 | 5.960 |
| 1.192 | 4.943 | 6.615 | 4.000 | 1.900 | 6.435 | 9.643 | 6.722 | 2.431 | 3.747 | 8.824 | 11.235 |
| 1.218 | 3.052 | 3.526 | 7.357 | 1.929 | 2.194 | 7.938 | 3.269 | 2.454 | 4.771 | 10.133 | 3.333 |
| 1.284 | 2.584 | 11.100 | 7.538 | 1.929 | 3.675 | 4.739 | 7.389 | 2.502 | 5.590 | 10.000 | 9.400 |
| 1.287 | 4.476 | 6.846 | 5.000 | 1.938 | 1.978 | 5.474 | 9.200 | 2.504 | 5.241 | 7.364 | 6.696 |
| 1.290 | 9.823 | 5.467 | 6.533 | 1.952 | 2.978 | 9.857 | 10.067 | 2.508 | 7.294 | 5.261 | 9.000 |
| 1.297 | 4.780 | 8.250 | 10.500 | 1.960 | 1.071 | 6.333 | 5.571 | 2.515 | 3.310 | 8.632 | 5.333 |
| 1.323 | 3.615 | 8.154 | 7.917 | 1.973 | 9.009 | 5.684 | 3.484 | 2.622 | 4.737 | 11.867 | 3.333 |
| 1.331 | 5.470 | 7.429 | 5.353 | 1.975 | 11.001 | 9.733 | 11.846 | 2.627 | 1.845 | 7.250 | 8.542 |
| 1.332 | 3.917 | 4.944 | 8.917 | 1.999 | 4.103 | 9.429 | 5.429 | 2.657 | 7.008 | 5.583 | 15.188 |
| 1.341 | 3.308 | 4.882 | 4.789 | 2.002 | 4.619 | 6.842 | 4.636 | 2.673 | 3.018 | 14.533 | 4.000 |
| 1.361 | 4.161 | 4.842 | 5.059 | 2.010 | 9.488 | 6.529 | 7.211 | 2.711 | 5.565 | 7.320 | 9.762 |
| 1.403 | 2.145 | 5.722 | 8.357 | 2.015 | 3.658 | 7.000 | 6.455 | 2.765 | 3.469 | 9.263 | 7.111 |
| 1.406 | 5.241 | 4.842 | 6.786 | 2.022 | 1.763 | 15.000 | 5.348 | 2.863 | 2.840 | 5.654 | 7.708 |
| 1.427 | 4.568 | 6.313 | 5.294 | 2.033 | 8.306 | 4.783 | 6.900 | 2.889 | 4.232 | 10.556 | 4.938 |
| 1.458 | 5.350 | 14.600 | 7.923 | 2.051 | 5.123 | 11.714 | 5.773 | 2.968 | 4.721 | 8.000 | 5.966 |
| 1.477 | 2.403 | 4.350 | 8.615 | 2.062 | 4.403 | 12.077 | 10.118 | 3.050 | 3.666 | 6.750 | 8.522 |
| 1.543 | 2.436 | 7.188 | 6.438 | 2.101 | 4.305 | 8.063 | 4.577 | 3.075 | 5.522 | 9.200 | 10.217 |
| 1.543 | 6.906 | 6.188 | 5.294 | 2.101 | 2.833 | 7.000 | 7.842 | 3.262 | 8.432 | 9.636 | 4.543 |
| 1.550 | 4.591 | 4.750 | 4.238 | 2.104 | 3.056 | 10.250 | 4.750 | 3.277 | 5.149 | 6.917 | 7.704 |
| 1.570 | 6.536 | 7.188 | 6.647 | 2.111 | 5.045 | 7.333 | 9.611 | 3.288 | 2.509 | 4.444 | 6.621 |
| 1.584 | 3.902 | 5.647 | 6.867 | 2.157 | 2.278 | 10.000 | 11.333 | 3.330 | 4.433 | 6.920 | 4.289 |
| 1.607 | 5.528 | 6.111 | 21.750 | 2.165 | 9.285 | 5.636 | 6.696 | 3.444 | 4.890 | 9.238 | 8.920 |
| 1.629 | 3.987 | 5.412 | 4.579 | 2.176 | 3.634 | 9.000 | 7.250 | 3.520 | 2.293 | 9.950 | 7.714 |
| 1.644 | 4.822 | 5.412 | 5.000 | 2.265 | 2.215 | 6.944 | 5.615 | 3.687 | 4.757 | 12.222 | 6.097 |
| 1.645 | 5.391 | 7.200 | 9.500 | 2.271 | 6.406 | 6.550 | 6.565 | 4.168 | 4.407 | 7.696 | 5.000 |
| 1.665 | 3.495 | 4.526 | 3.955 | 2.290 | 3.862 | 9.688 | 4.308 | 4.425 | 6.849 | 8.000 | 4.119 |
| 1.677 | 2.772 | 8.533 | 5.632 | 2.293 | 5.397 | 7.889 | 7.143 | 4.600 | 5.339 | 12.600 | 5.474 |
| 1.746 | 3.923 | 7.133 | 5.091 | 2.319 | 6.720 | 7.824 | 4.769 | | | | |
| 1.794 | 4.052 | 6.938 | 4.429 | 2.352 | 3.347 | 4.857 | 12.200 | | | | |

**[Table 9]**

| Length | | | | | | | | | | | |
|---|---|---|---|---|---|---|---|---|---|---|---|
| Comparative Example 1 | Example 1 | Example 2 | Example 3 | Comparative Example 1 | Example 1 | Example 2 | Example 3 | Comparative Example 1 | Example 1 | Example 2 | Example 3 |
| 3.621 | 4.138 | 11.552 | 11.034 | 5.862 | 10.345 | 18.966 | 18.793 | 7.241 | 15.862 | 25.345 | 26.552 |
| 3.966 | 5.517 | 12.931 | 11.724 | 6.034 | 10.345 | 19.138 | 18.966 | 7.241 | 15.862 | 25.862 | 26.552 |
| 3.966 | 5.690 | 13.966 | 12.241 | 6.034 | 10.517 | 19.138 | 19.310 | 7.414 | 16.034 | 25.862 | 26.552 |
| 4.310 | 6.207 | 14.138 | 12.241 | 6.034 | 10.690 | 19.138 | 19.310 | 7.414 | 16.207 | 26.207 | 27.241 |
| 4.310 | 6.552 | 14.138 | 12.931 | 6.034 | 10.690 | 19.655 | 19.310 | 7.586 | 16.207 | 26.379 | 27.414 |
| 4.655 | 6.897 | 14.310 | 13.621 | 6.207 | 10.690 | 19.828 | 19.483 | 7.759 | 16.379 | 26.724 | 28.103 |
| 4.655 | 7.069 | 14.310 | 13.793 | 6.207 | 10.862 | 19.828 | 19.655 | 7.759 | 16.379 | 27.069 | 29.310 |
| 4.655 | 7.414 | 14.828 | 14.655 | 6.207 | 11.034 | 20.345 | 19.655 | 7.759 | 16.724 | 27.069 | 29.655 |
| 4.828 | 7.759 | 14.828 | 14.828 | 6.379 | 11.034 | 20.517 | 19.655 | 7.931 | 16.897 | 27.586 | 29.828 |
| 4.828 | 7.759 | 15.000 | 15.000 | 6.379 | 11.034 | 20.862 | 20.172 | 7.931 | 17.414 | 27.931 | 29.828 |
| 4.828 | 8.276 | 15.345 | 15.000 | 6.379 | 11.207 | 21.379 | 20.172 | 8.103 | 17.586 | 27.931 | 29.828 |
| 5.000 | 8.276 | 15.345 | 15.345 | 6.379 | 11.379 | 21.552 | 20.517 | 8.276 | 17.586 | 28.276 | 30.000 |
| 5.000 | 8.276 | 15.862 | 15.517 | 6.379 | 11.379 | 21.897 | 20.517 | 8.276 | 17.759 | 28.276 | 30.000 |
| 5.172 | 8.448 | 15.862 | 15.517 | 6.379 | 11.379 | 22.069 | 20.862 | 8.276 | 17.931 | 28.276 | 30.690 |
| 5.345 | 8.621 | 15.862 | 15.690 | 6.379 | 11.724 | 22.241 | 21.207 | 8.276 | 18.276 | 28.448 | 31.034 |
| 5.345 | 8.621 | 15.862 | 15.690 | 6.379 | 12.069 | 22.414 | 21.379 | 8.276 | 18.966 | 28.621 | 31.552 |
| 5.345 | 8.621 | 16.379 | 16.034 | 6.379 | 12.241 | 22.414 | 21.379 | 8.276 | 19.138 | 28.966 | 31.897 |
| 5.345 | 8.621 | 16.552 | 16.379 | 6.552 | 12.414 | 22.586 | 21.897 | 8.276 | 19.138 | 29.310 | 32.414 |
| 5.517 | 8.966 | 16.724 | 16.379 | 6.552 | 12.759 | 22.759 | 22.414 | 8.448 | 19.310 | 29.828 | 32.586 |
| 5.517 | 8.966 | 16.897 | 16.724 | 6.552 | 12.759 | 22.759 | 22.931 | 8.448 | 19.828 | 30.345 | 32.759 |
| 5.517 | 8.966 | 17.069 | 16.897 | 6.724 | 13.103 | 22.759 | 22.931 | 8.448 | 20.172 | 30.517 | 32.931 |
| 5.517 | 9.310 | 17.069 | 16.897 | 6.724 | 13.621 | 22.931 | 23.448 | 8.448 | 20.345 | 30.690 | 33.103 |
| 5.690 | 9.310 | 17.414 | 17.069 | 6.724 | 13.621 | 22.931 | 23.621 | 8.621 | 20.345 | 31.552 | 33.103 |
| 5.690 | 9.310 | 17.759 | 17.586 | 6.724 | 13.621 | 23.103 | 23.793 | 8.621 | 20.345 | 31.724 | 33.793 |
| 5.690 | 9.655 | 17.759 | 17.759 | 6.897 | 13.793 | 23.276 | 23.793 | 8.793 | 20.345 | 32.759 | 35.345 |
| 5.690 | 9.655 | 17.931 | 17.759 | 6.897 | 13.793 | 23.276 | 23.793 | 8.793 | 21.724 | 33.448 | 35.345 |
| 5.690 | 9.655 | 17.931 | 17.759 | 6.897 | 14.138 | 23.448 | 24.483 | 8.793 | 21.897 | 34.310 | 35.862 |
| 5.690 | 9.828 | 18.103 | 17.759 | 6.897 | 14.310 | 23.793 | 24.828 | 9.138 | 22.414 | 34.483 | 35.862 |
| 5.862 | 9.828 | 18.276 | 18.103 | 6.897 | 14.310 | 24.138 | 25.172 | 9.138 | 25.690 | 36.552 | 37.241 |
| 5.862 | 10.000 | 18.448 | 18.103 | 6.897 | 14.483 | 24.483 | 25.690 | 9.483 | 27.759 | 37.586 | 38.448 |
| 5.862 | 10.000 | 18.621 | 18.276 | 6.897 | 14.655 | 24.828 | 25.690 | 10.517 | 28.276 | 37.931 | 40.517 |
| 5.862 | 10.172 | 18.621 | 18.448 | 7.069 | 14.655 | 25.000 | 25.862 | 10.690 | 30.690 | 43.448 | 41.897 |
| 5.862 | 10.172 | 18.793 | 18.448 | 7.069 | 14.655 | 25.172 | 26.034 | | | | |
| 5.862 | 10.345 | 18.966 | 18.621 | 7.069 | 15.172 | 25.172 | 26.034 | | | | |

From the above results, it was shown that in the case of using a grinding device having no blade as compared with the case of using a silent cutter, the proportion of fibers having a small aspect ratio is remarkably reduced, and the proportion of long fibers is remarkably increased.

### [Evaluation of physical properties]

The defibrated products obtained in Comparative Example 1 and Examples 1 to 3 were each filled in an aluminum circular petri dish with a diameter of 50 mm in an amount of 20 g, and formed into a circular shape. Using a cylindrical plunger with a diameter of 18 mm, a texture test was performed using "TENSIPRESSER TTP-50BXII" manufactured by Taketomo Electric, LTD., and analysis was performed using a TPA analysis program. The measurement was performed three times for each sample, and the average value was used. The measurement conditions are shown in Table 10. The obtained analysis results are shown in Table 11.

**[Table 10]**

| | |
|---|---|
| Time sampling | 0.05 sec |
| Clearance 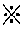 | 5 mm |
| Thickness 1 | 25 mm |
| Thickness 2 | 25 mm |
| Bites speed | 2 mm/sec |
| Multiply | 2 |
| Magnificant | 5.0 |
| (+) Gain | 1.0 |
| (-) Gain | 1.0 |
| Loadcell | 10 kg |
| Plunger area | 2.540 cm² |
| 2nd speed | 2 mm/sec |
| Deformation | 50% |
| Selector | 43 |
| Mode Check | 2 |

| | |
|---|---|
| *Clearance indicates that the plunger was lowered to a height of 5 mm from the sample stage. | |

**[Table 11]**

| | Hardness (N/m²) | Gumminess (N/m²) | Brittleness (N/m²) | Cohesiveness | Elasticity |
|---|---|---|---|---|---|
| Comparative Example 1 | 35910 | 11960 | 35910 | 0.334 | 0.516 |
| Example 1 | 82620 | 44370 | 78830 | 0.537 | 0.658 |
| Example 2 | 95540 | 56730 | 83780 | 0.593 | 0.701 |
| Example 3 | 108000 | 60710 | 101000 | 0.562 | 0.681 |

Among the evaluation items, the "hardness (H1)" is the maximum test force when a load is applied to the sample with the plunger, and indicates the difficulty of collapsing the sample. In the case of this sample, the sample is collapsed when it is excessively compressed, and thus the numerical value decreases when the sample is collapsed.

Among the evaluation items, the "gumminess (H1 × (A2/A1))" is a value obtained by multiplying hardness by cohesiveness, and is interpreted as energy required for chewing. As the value is smaller, less energy is required for chewing, which indicates that the sample is easily collapsed.

Among the evaluation items, the "brittleness (MAX-MIN)" is a numerical value obtained by subtracting the load at the first bottom point after the peak point from the load at the first peak point after the stress is applied to the plunger. This represents the force with which food is broken by chewing. The smaller the numerical value of brittleness, the easier the sample collapses in the mouth, the larger the surface area, and the more the saliva is absorbed, and thus the inside of the mouth becomes dry, making it difficult to swallow.

Among the evaluation items, the "cohesiveness (A2/A1)" is the ratio of the first and second load areas (energy) when two consecutive loads are applied to the sample with the plunger. The ratio of residual elasticity after application of a load once is shown. The closer the numerical value is to 1, the more elasticity remains, that is, the harder the sample is to collapse.

Among the evaluation items, the "elasticity (L2/L1)" is calculated by a ratio of displacements when two consecutive loads are applied to the sample with the plunger. That is, this represents the force with which the sample pushes back during compression. The smaller the numerical value of the elasticity, the more the sample collapses and the weaker the force with which the sample pushes back.

From the above results, it was suggested that as compared with the defibrated product obtained in Comparative Example 1, all of the defibrated products obtained in Examples 1 to 3 were hardly collapsed by chewing, and could impart excellent texture to food. The values of hardness, gumminess, and brittleness were the highest in Example 3. This is considered to be because the longer the fibers constituting the defibrated product, the higher the degree of entanglement of the fibers and the less likely the sample is to collapse. In addition, the values of cohesiveness and elasticity were the highest in Example 2. This may be affected by a small proportion of fibers having an aspect ratio of 5 or less among the fibers constituting the defibrated product.

### [Evaluation of influence by raw materials]

In order to evaluate the influence by raw materials, fibrillation was performed under the same conditions as in Example 2 using various textured fibrous vegetable proteins, and the aspect ratios were evaluated. Here, a commercially available textured fibrous vegetable protein derived from pea (TEXTURE PEA PROTEIN 70% manufactured by Yantai Shuangta Food Co., Ltd.) was used in Example 4, a commercially available textured fibrous vegetable protein derived from soybean and wheat (S Fibertex 2265 manufactured by Gushen Biological Technology Group Co., Ltd.) was used in Example 5, a textured fibrous vegetable protein derived from soybean produced as described above was used in Comparative Example 2, a commercially available textured fibrous vegetable protein derived from soybean (Apex 1000 manufactured by Fuji Oil Co., Ltd.) was used in Comparative Example 3, and a commercially available textured fibrous vegetable protein derived from soybean (Apex 950 manufactured by Fuji Oil Co., Ltd.) was used in Comparative Example 4. Results thereof are shown in Table 12.

**[Table 12]**

| Aspect ratio | Example 2 (Pea) | Example 4 (Pea, commercial) | Comparati ve Example 2 (Soybean) | Comparati ve Example 3 (Soybean, commercial 1) | Comparati ve Example 4 (Soybean, commercial 2) | Example 5 (Soybean + Wheat, commerci al) |
|---|---|---|---|---|---|---|
| <5 | 14 | 36 | 100 | 90 | 98 | 56 |
| 5 or more and less than 10 | 74 | 56 | 0 | 10 | 2 | 37 |
| 10≤ | 12 | 8 | 0 | 0 | 0 | 7 |
| Average | 7.62 | 6.16 | 1.62 | 2.59 | 1.66 | 5.26 |

From the above results, it is found that when the textured fibrous vegetable protein derived from pea is used, the ratio of fibers having a small aspect ratio tends to be small. In addition, it can be seen that even when a textured fibrous vegetable protein derived from soybean is used, the ratio of fibers having a small aspect ratio can be reduced depending on the blending.

Exemplary embodiments of the present disclosure are shown below.
[1] A defibrated product of a textured fibrous vegetable protein, wherein
   a number average length of the contained fibers is 10 mm or more, and
   the content of fibers having an aspect ratio of less than 5 is 80% or less on a number basis.
[2] The defibrated product of a textured fibrous vegetable protein according to [1], wherein a number average length of the contained fibers is 10 mm or more and 100 mm or less.
[3] The defibrated product of a textured fibrous vegetable protein according to [1] or [2], wherein a number average length of the contained fibers is 11 mm or more and 80 mm or less.
[4] The defibrated product of a textured fibrous vegetable protein according to any one of [1] to [3], wherein a number average length of the contained fibers is 13 mm or more and 60 mm or less.
[5] The defibrated product of a textured fibrous vegetable protein according to any one of [1] to [4], wherein a number average length of the contained fibers is 15 mm or more and 50 mm or less.
[6] The defibrated product of a textured fibrous vegetable protein according to any one of [1] to [5], wherein a number average length of the contained fibers is 17 mm or more and 40 mm or less.
[7] The defibrated product of a textured fibrous vegetable protein according to any one of [1] to [6], wherein a number average length of the contained fibers is 20 mm or more and 30 mm or less.
[8] The defibrated product of a textured fibrous vegetable protein according to any one of [1] to [7], wherein the content of fibers having an aspect ratio of less than 5 is 0% or more and 80% or less on a number basis.
[9] The defibrated product of a textured fibrous vegetable protein according to any one of [1] to [8], wherein the content of fibers having an aspect ratio of less than 5 is 1% or more and 75% or less on a number basis.
[10] The defibrated product of a textured fibrous vegetable protein according to any one of [1] to [9], wherein the content of fibers having an aspect ratio of less than 5 is 2% or more and 70% or less on a number basis.
[11] The defibrated product of a textured fibrous vegetable protein according to any one of [1] to [10], wherein the content of fibers having an aspect ratio of less than 5 is 3% or more and 60% or less on a number basis.
[12] The defibrated product of a textured fibrous vegetable protein according to any one of [1] to [11], wherein the content of fibers having an aspect ratio of less than 5 is 4% or more and 50% or less on a number basis.
[13] The defibrated product of a textured fibrous vegetable protein according to any one of [1] to [12], wherein the content of fibers having an aspect ratio of less than 5 is 5% or more and 40% or less on a number basis.
[14] The defibrated product of a textured fibrous vegetable protein according to any one of [1] to [13], wherein the content of fibers having an aspect ratio of less than 5 is 6% or more and 30% or less on a number basis.
[15] The defibrated product of a textured fibrous vegetable protein according to any one of [1] to [14], wherein the content of fibers having an aspect ratio of less than 5 is 7% or more and 20% or less on a number basis.
[16] The defibrated product of a textured fibrous vegetable protein according to any one of [1] to [15], wherein the content of fibers having an aspect ratio of 10 or more is 0.5% or more on a number basis.
[17] The defibrated product of a textured fibrous vegetable protein according to any one of [1] to [16], wherein the content of fibers having an aspect ratio of 10 or more is 0.5% or more and 100% or less on a number basis.
[18] The defibrated product of a textured fibrous vegetable protein according to any one of [1] to [17], wherein the content of fibers having an aspect ratio of 10 or more is 0.8% or more and 80% or less on a number basis.
[19] The defibrated product of a textured fibrous vegetable protein according to any one of [1] to [18], wherein the content of fibers having an aspect ratio of 10 or more is 1% or more and 60% or less on a number basis.
[20] The defibrated product of a textured fibrous vegetable protein according to any one of [1] to [19], wherein the content of fibers having an aspect ratio of 10 or more is 3% or more and 50% or less on a number basis.
[21] The defibrated product of a textured fibrous vegetable protein according to any one of [1] to [20], wherein the content of fibers having an aspect ratio of 10 or more is 5% or more and 40% or less on a number basis.
[22] The defibrated product of a textured fibrous vegetable protein according to any one of [1] to [21], wherein the content of fibers having an aspect ratio of 10 or more is 5% or more and 40% or less on a number basis.
[23] The defibrated product of a textured fibrous vegetable protein according to any one of [1] to [22], wherein the content of fibers having an aspect ratio of 10 or more is 7% or more and 30% or less on a number basis.
[24] The defibrated product of a textured fibrous vegetable protein according to any one of [1] to [23], wherein the content of fibers having an aspect ratio of 10 or more is 9% or more and 20% or less on a number basis.
[25] The defibrated product of a textured fibrous vegetable protein according to any one of [1] to [24], wherein the content of fibers having an aspect ratio of 5 or more and less than 10 is 20% or more and 95% or less on a number basis.
[26] The defibrated product of a textured fibrous vegetable protein according to any one of [1] to [25], wherein the content of fibers having an aspect ratio of 5 or more and less than 10 is 25% or more and 90% or less on a number basis.
[27] The defibrated product of a textured fibrous vegetable protein according to any one of [1] to [26], wherein the content of fibers having an aspect ratio of 5 or more and less than 10 is 50% or more and 85% or less on a number basis.
[28] The defibrated product of a textured fibrous vegetable protein according to any one of [1] to [27], wherein the content of fibers having an aspect ratio of 5 or more and less than 10 is 60% or more and 80% or less on a number basis.
[29] The defibrated product of a textured fibrous vegetable protein according to any one of [1] to [28], wherein the content of fibers having an aspect ratio of 5 or more and less than 10 is 70% or more and 75% or less on a number basis.
[30] The defibrated product of a textured fibrous vegetable protein according to any one of [1] to [29], wherein the content of fibers having a length of less than 10 mm is 50% or less on a number basis.
[31] The defibrated product of a textured fibrous vegetable protein according to any one of [1] to [30], wherein the content of fibers having a length of less than 10 mm is 0% or more and 50% or less on a number basis.
[32] The defibrated product of a textured fibrous vegetable protein according to any one of [1] to [31], wherein the content of fibers having a length of less than 10 mm is 0% or more and 40% or less on a number basis.
[33] The defibrated product of a textured fibrous vegetable protein according to any one of [1] to [32], wherein the content of fibers having a length of less than 10 mm is 0% or more and 30% or less on a number basis.
[34] The defibrated product of a textured fibrous vegetable protein according to any one of [1] to [33], wherein the content of fibers having a length of less than 10 mm is 0% or more and 20% or less on a number basis.
[35] The defibrated product of a textured fibrous vegetable protein according to any one of [1] to [34], wherein the content of fibers having a length of less than 10 mm is 0% or more and 10% or less on a number basis.
[36] The defibrated product of a textured fibrous vegetable protein according to any one of [1] to [35], wherein the content of fibers having a length of less than 10 mm is 0% or more and 5% or less on a number basis.
[37] The defibrated product of a textured fibrous vegetable protein according to any one of [1] to [36], wherein the content of fibers having a length of 30 mm or more is 0.5% or more on a number basis.
[38] The defibrated product of a textured fibrous vegetable protein according to any one of [1] to [37], wherein the content of fibers having a length of 30 mm or more is 0.5% or more and 100% or less on a number basis.
[39] The defibrated product of a textured fibrous vegetable protein according to any one of [1] to [38], wherein the content of fibers having a length of 30 mm or more is 0.8% or more and 80% or less on a number basis.
[40] The defibrated product of a textured fibrous vegetable protein according to any one of [1] to [39], wherein the content of fibers having a length of 30 mm or more is 1% or more and 60% or less on a number basis.
[41] The defibrated product of a textured fibrous vegetable protein according to any one of [1] to [40], wherein the content of fibers having a length of 30 mm or more is 5% or more and 40% or less on a number basis.
[42] The defibrated product of a textured fibrous vegetable protein according to any one of [1] to [41], wherein the content of fibers having a length of 30 mm or more is 10% or more and 20% or less on a number basis.
[43] The defibrated product of a textured fibrous vegetable protein according to any one of [1] to [42], wherein the content of fibers having a length of 10 mm or more and less than 30 mm is 50% or more and 95% or less on a number basis.
[44] The defibrated product of a textured fibrous vegetable protein according to any one of [1] to [43], wherein the content of fibers having a length of 10 mm or more and less than 30 mm is 60% or more and 92% or less on a number basis.
[45] The defibrated product of a textured fibrous vegetable protein according to any one of [1] to [44], wherein the content of fibers having a length of 10 mm or more and less than 30 mm is 70% or more and 90% or less on a number basis.
[46] The defibrated product of a textured fibrous vegetable protein according to any one of [1] to [45], wherein the content of fibers having a length of 10 mm or more and less than 30 mm is 80% or more and 88% or less on a number basis.
[47] The defibrated product of a textured fibrous vegetable protein according to any one of [1] to [46], wherein the contained fibers have a number average width of 1 mm or more and 10 mm or less.
[48] The defibrated product of a textured fibrous vegetable protein according to any one of [1] to [47], wherein the contained fibers have a number average width of 2 mm or more and 8 mm or less.
[49] The defibrated product of a textured fibrous vegetable protein according to any one of [1] to [48], wherein the contained fibers have a number average width of 3 mm or more and 5 mm or less.
[50] The defibrated product of a textured fibrous vegetable protein according to any one of [1] to [49], which contains a protein derived from pea.
[51] The defibrated product of a textured fibrous vegetable protein according to any one of [1] to [50], which does not contain a protein derived from soybean.
[52] The defibrated product of a textured fibrous vegetable protein according to any one of [1] to [51], having a water content of 40 mass% or more and 80 mass% or less.
[53] The defibrated product of a textured fibrous vegetable protein according to any one of [1] to [52], having a water content of 50 mass% or more and 70 mass% or less.
[54] A method for producing the defibrated product of a textured fibrous vegetable protein according to any one of [1] to [53], including a step of processing a textured fibrous vegetable protein in a gap between a first surface and a second surface moving relative to the first surface.
[55] A package containing a cooking material containing the defibrated product of a textured fibrous vegetable protein according to any one of [1] to [54] in a container.
[56] The package according to [55], wherein the cooking material is a material before cooking.
[57] A method for producing a defibrated product of a textured fibrous vegetable protein, including a step of processing a textured fibrous vegetable protein in a gap between a first surface and a second surface facing the first surface and moving relative to the first surface.
[58] The method for producing a defibrated product of a textured fibrous vegetable protein according to [57], wherein neither the first surface nor the second surface has a blade.
[59] The method for producing a defibrated product of a textured fibrous vegetable protein according to [57] or [58], using a grinding device.
[60] The method for producing a defibrated product of a textured fibrous vegetable protein according to any one of [57] to [59], wherein the grinding device uses at least one selected from the group consisting of a stone mill, a rotary stone mill, an earthenware mortar, a mortar, and a grinding kneader.
[61] The method for producing a defibrated product of a textured fibrous vegetable protein according to any one of [57] to [60], wherein the gap is 0.5 mm or more and 3 mm or less.
[62] The method for producing a defibrated product of a textured fibrous vegetable protein according to any one of [57] to [61], wherein the gap is 0.8 mm or more and 2.8 mm or less.
[63] The method for producing a defibrated product of a textured fibrous vegetable protein according to any one of [57] to [62], wherein the gap is 1 mm or more and 2.6 mm or less.
[64] The method for producing a defibrated product of a textured fibrous vegetable protein according to any one of [57] to [63], wherein the gap is 1.2 mm or more and 2 mm or less.
[65] The method for producing a defibrated product of a textured fibrous vegetable protein according to any one of [57] to [64], wherein the textured fibrous vegetable protein contains a protein derived from pea.
[66] The method for producing a defibrated product of a textured fibrous vegetable protein according to any one of [57] to [65], wherein the textured fibrous vegetable protein does not contain a protein derived from soybean.

## Claims

1. A defibrated product of a textured fibrous vegetable protein, wherein
a number average length of contained fibers is 10 mm or more, and
content of fibers having an aspect ratio of less than 5 is 80% or less on a number basis.

2. The defibrated product of a textured fibrous vegetable protein according to claim 1, wherein content of fibers having an aspect ratio of 10 or more is 0.5% or more on a number basis.

3. The defibrated product of a textured fibrous vegetable protein according to claim 1 or 2, wherein content of fibers having an aspect ratio of 5 or more and less than 10 is 20% or more and 95% or less on a number basis.

4. The defibrated product of a textured fibrous vegetable protein according to claim 1 or 2, wherein content of fibers having a length of less than 10 mm is 50% or less on a number basis.

5. The defibrated product of a textured fibrous vegetable protein according to claim 1 or 2, wherein content of fibers having a length of 30 mm or more is 0.5% or more on a number basis.

6. The defibrated product of a textured fibrous vegetable protein according to claim 1 or 2, wherein content of fibers having a length of 10 mm or more and less than 30 mm is 50% or more and 95% or less on a number basis.

7. The defibrated product of a textured fibrous vegetable protein according to claim 1 or 2, wherein a number average width of contained fibers is 1 mm or more and 10 mm or less.

8. The defibrated product of a textured fibrous vegetable protein according to claim 1 or 2, which comprises a protein derived from pea.

9. The defibrated product of a textured fibrous vegetable protein according to claim 1 or 2, which does not comprise a protein derived from soybean.

10. The defibrated product of a textured fibrous vegetable protein according to claim 1 or 2, having a water content of 40 mass% or more and 80 mass% or less.

11. A method for producing the defibrated product of a textured fibrous vegetable protein according to claim 1 or 2, comprising a step of processing a textured fibrous vegetable protein in a gap between a first surface and a second surface moving relative to the first surface.

12. A package containing a cooking material containing the defibrated product of a textured fibrous vegetable protein according to claim 1 or 2 in a container.

13. The package according to claim 12, wherein the cooking material is a material before cooking.

14. A method for producing a defibrated product of a textured fibrous vegetable protein, comprising a step of processing a textured fibrous vegetable protein in a gap between a first surface and a second surface facing the first surface and moving relative to the first surface.

15. The method for producing a defibrated product of a textured fibrous vegetable protein according to claim 14, wherein neither the first surface nor the second surface has a blade.

16. The method for producing a defibrated product of a textured fibrous vegetable protein according to claim 14 or 15, using a grinding device.

17. The method for producing a defibrated product of a textured fibrous vegetable protein according to claim 16, wherein the grinding device uses at least one selected from the group consisting of a stone mill, a rotary stone mill, an earthenware mortar, a mortar, and a grinding kneader.

18. The method for producing a defibrated product of a textured fibrous vegetable protein according to claim 14 or 15, wherein the gap is 0.5 mm or more and 3 mm or less.

19. The method for producing a defibrated product of a textured fibrous vegetable protein according to claim 14 or 15, wherein the textured fibrous vegetable protein contains a protein derived from pea.

20. The method for producing a defibrated product of a textured fibrous vegetable protein according to claim 14 or 15, wherein the textured fibrous vegetable protein does not contain a protein derived from soybean.
